Europäisches Patentamt

European Patent Office

Office européen des brevets

Publication number: **0 287 880**

**A1**

# EUROPEAN PATENT APPLICATION

Application number: **88105317.7**

Int. Cl.⁴ **G02F 1/35** , **G02B 6/12**

Date of filing: **01.04.88**

A request for addition of claims has been filed pursuant to Rule 88 EPC. A decision on the request will be taken during the proceedings before the Examining Division (Guidelines for Examination in the EPO, A-V, 2.2).

Priority: **10.04.87 US 37175**

Date of publication of application:
**26.10.88 Bulletin 88/43**

Designated Contracting States:
**AT DE FR GB NL**

Applicant: **POLAROID CORPORATION**
**549 Technology Square**
**Cambridge, Massachusetts 02139(US)**

Inventor: **Sanford, Norman A.**
**20 Willard Lane**
**Stillriver, MA 01467(US)**
Inventor: **Dyes, William A.**
**Uptack Avenue**
**Groveland, MA 01834(US)**

Representative: **Reitzner, Bruno, Dr. et al**
**Patentanwälte Dipl.-Ing. R. Splanemann Dr.**
**B. Reitzner Tal 13**
**D-8000 München 2(DE)**

Optical mixer and parametric up-converter.

An optical mixer (10) for producing sum-frequency radiation from radiation from at least two laser inputs (20) includes a waveguide (12) disposed on a ferroelectric substrate (11). In particular, preferred embodiments of the inventive mixer (10) include a proton exchange or a Ti diffused lithium niobate channel waveguide (12) embedded in a lithium niobate substrate (11).

EP 0 287 880 A1

## OPTICAL MIXER AND PARAMETRIC UP-CONVERTER

Technical Field of the Invention

The present invention pertains to optical mixers and optical parametric up-converters and, in particular, to integrated optical mixers and optical parameteric up-converters which utilize a channel waveguide.

Background of the Invention

Optical mixers are well known in the art. Such apparatus typically depend on the physical phenomenon known as optical nonlinear mixing in bulk crystals. Further, it is also well known that due to the small value of the coupling coefficients for this process, such nonlinear mixing normally requires high power laser beams for reasonably efficient output. As such, it would be desirable to achieve optical mixing in an apparatus which uses relatively lower power laser sources such as laser diodes.

Further, harmonic generation using integrated optical devices has long been a subject of intense investigation in the art. In particular, the high power densities afforded by single mode waveguides in materials such as $LiNbO_3$ have led to many attempts to produce efficient devices that could operate at low input optical power. As a result, it would be desirable to achieve optical mixing and harmonic generation in an integrated optical device and, additionally, to achieve this by use of relatively lower power laser sources such as laser diodes.

Still further, it would be desirable to achieve optical parameteric up-conversion using an integrated optic device, parametric up-conversion being defined here as that process whereby a first, relatively weak beam of optical radiation is amplified by coincidental application of a second, stronger beam of radiation to produce a relatively stronger beam of radiation than the first beam which retains the information content of the first beam.

Summary of the Invention

Embodiments of the present invention provide optical mixing, optical harmonic generation and optical parameteric up-conversion in integrated optics devices and, in particular, in waveguides disposed on ferroelectric substrates.

A preferred embodiment of an inventive optical mixer and harmonic generator provides optical sum-frequency generation and second harmonic generation in proton exchanged $LiNbO_3$ and $LiTaO_3$ channel waveguides. More specifically: a preferred embodiment of the present invention provides: (1) yellow sum-frequency radiation as a result of simultaneously cw coupling radiation from a Nd:YAG laser operating at 1.32 um and from second Nd:YAG laser operating at 1.06 um into a proton-exchanged $LiNbO_3$ channel waveguide embedded in a $LiNbO_3$ substrate and (2) blue sum-frequency radiation as a result of simultaneously cw coupling radiation from a cw laser diode operating at 0.84 um and from a Nd:YAG laser operating at 1.06 um into a proton-exchanged $LiNbO_3$ channel waveguide embedded in a $LiNbO_3$ substrate. The above-identified apparatus also produces second harmonic radiation which is separately generated from the two input laser beams in addition to the sum-frequency radiation. Both the sum-frequency radiation and the second harmonic radiation emerge from the waveguide as Cerenkov radiation and enter the substrate within which the channel waveguide is embedded.

Advantageously, embodiments of the present invention can provide a tunable source of laser radiative in an integrated optic device if one of the input sources used to irradiate the channel waveguide is a tunable laser such as a dye laser, or alternatively, a current tuned semiconductor laser. Further, tunable operation can also be achieved in other embodiments of the present invention wherein several lasers having slightly different frequencies are coupled into the channel waveguide by bulk optics or by use of integrated optic couplers. The tunable output is achieved by sum-frequency generation when the individual lasers are switched on or off individually or in groups.

Embodiments of the present invention also provide optical parameteric up-conversion in an integrated optic device at the relatively low powers afforded by cw diode lasers. This can occur when one of the laser inputs is, for example, from a low power laser diode. In this case, the sum-frequency radiation produced in conjunction with a second, and more powerful, laser will retain the "information" content of the lower power radiation from the diode.

## Brief Description of the Drawing

A complete understanding of the present invention may be gained by considering the following detailed description in conjuction with the accompanying drawing, in which:

FIG. 1 shows, in pictorial form, a portion of an embodiment of an optical mixer fabricated in accordance with the present invention; and

FIG. 2 shows, in pictoral form, a top view of a portion of a further embodiment of an optical mixer fabricated in accordance with the present invention.

To facilitate understanding, identical reference numerals are used to designate elements common to the figures.

## Detailed Description

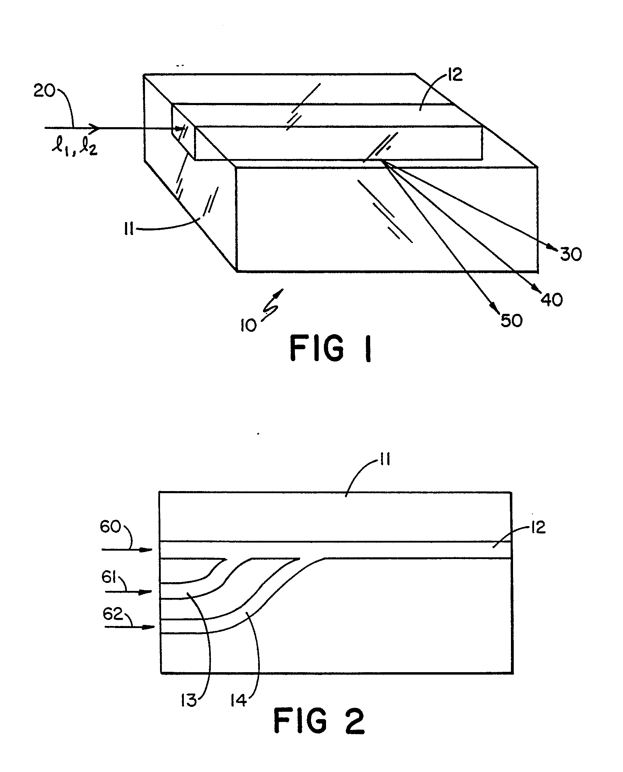

FIG. 1 shows an embodiment of the inventive optical sum-frequency generation apparatus 10. Apparatus 10 comprises $LiNbO_3$ substrate 11 and proton exchanged $LiNbO_3$ channel waveguide 12. Input beam 20 comprises radiation from a first laser source (not shown) at wavelength $l_1$ and radiation from a second laser source (not shown) at wavelength $l_2$ --we have chosen $l_1 > l_2$. The radiation from the first and second laser sources are coupled into channel waveguide 12 by means of any one of a number of differents methods, such methods and the apparatus for achieving such coupling being well known to those of ordinary skill in the art.

As shown in FIG. 1, three beams exit channel waveguide 12 and enter substrate 11: (1) beam 30 having wavelength $l_1/2$ is provided as a result of second harmonic generation from the output of the first laser source and is forward radiated at a shallow angle into substrate 11 as Cerenkov radiation; (2) beam 40 having a wavelength corresponding to sum-frequency generation from the outputs of the first and second laser sources is forward radiated at a shallow angle into substrate 11 as Cerenkov radiation; and (3) beam 50 having wavelength $l_2/2$ is provided as result of second harmonic generation from the output of the second laser source and is forward radiated at a shallow angle into substrate 11 as Cerenkov radiation. In this embodiment, we have produced ˜.25 uW of yellow sum-frequency radiation by simultaneously coupling 5mW of cw radiation from a Nd:YAG laser operating at 1.32 um and 8 mW of cw radiation from a Nd:YAG laser operating at 1.06 um into waveguide 12. The combined power produced from second harmonic generation and from sum-frequency radiation in red and yellow was ˜0.05 uW. In addition, we were able to produce blue radiation as a result of sum-frequency generation by simultaneously coupling 1 mW of cw radiation from a laser diode operating at 0.840 um and 8 mW of cw radiation from a Nd:YAG laser operating at 1.06 um into waveguide 12.

Sum-frequency generation means that if $w_1$ is the frequency of the first laser source and $w_2$ is the frequency of the second laser source, then $w_m = w_1 + w_2$ is the frequency of the sum-frequency generation radiation. Thus, as a result of sum-frequency generation, a mixed, nonlinear polarization will radiate at an intermediate wavelength $l_1$ where $1/l_1$ is approximately equal to $1/l_1 + 1/l_2$.

Since the wavelength of the sum-frequency radiation is intermediate to the wavelengths of the two sources, the emission angle thereof from waveguide 12 and into substrate 11 is also intermediate to the second radiation from the first laser source and the second laser source.

In fabricating the above-described embodiment one can use either x-cut substrates and fabricate channel waveguides oriented along the y-axis or z-cut substrates and fabricate channel waveguides oriented along the x-axis, the y-axis. or any other intermediate orientation. For example, the x-cut $LiNbO_3$ substrates were prepared by proton exchange in hot benzoic acid. The process included the following steps: (1) and ˜400 angstrom thick layer of Cr was deposited on the x-cut substrate using standard evaporation techniques; (2) next, an ˜3 um wide diffusion aperture was photolithographically opened through the Cr layer parallel to the y-axis; (3) next, the substrate was packed in a glass flask with powdered benzoic acid; (4) next, the glass flask was immersed in a heating bath and heated to 249°C in 20 minutes; (5) next, the glass flask was held in the bath at 249 °C for ˜5 minutes --During this hot immersion step, an ion exchange process occurs in which lithium from the substrate is lost through the diffusion aperture and replaced with hydrogen ions from the acid. As a result, the ion exchanged region experiences an increase in extraordinary index of refraction which extends roughly 1 micron in depth into the substrate; (6) next. the glass flask was lifted above the heating bath and allowed to cool. --This process provides a > 50% exchange of H for Li and produces a multimode waveguide in the .800 micron wavelength region. The above-described proton exchange process has been discussed extensively in the literature and is well known to those of ordinary skill in the art; (7) next, the diffusion masks are removed; and (8) the specimen was cut and polished for end-fire excitation. The length of the waveguide varied between 5-10 mm. We have used substrates obtained from Crystal Technology, Inc. which are of so-called "optical grade quality."

As described above, for end-fire TE mode excitation, the Cerenkov second harmonic and the Cerenkov sum-frequency radiation is forward radiated at a shallow angle from channel waveguide 12 and into substrate 11. The radiation then exits the output facet of substrate 11 and appears as bright bands in the far field.

Further embodiments of the present invention comprise Ti diffused LiNbO₃ waveguides. We have fabricated such channel waveguides, for example, by patterning 400-800 angstrom thick, 2-6 micron wide Ti stripes parallel to the y-axis on x-cut LiNbO₃ plates. We carried out the Ti diffusion in a furnace at ˜1020 °C for six hours in an atmosphere of flowing wet O₂. As a result, TiO₂ diffused into the LiNbO₃ substrate to form a channel waveguide.

Still further embodiments of the present invention comprise proton exchange LiTaO₃ channel waveguides. Such waveguides were fabricated from x-cut LiTaO₃ plates in accordance with the following steps: (1) an ˜400 angstrom thick layer of Cr was desposited on the substrate using standard evaporation techniques; (2) next, an ˜3 um wide diffusion aperture was photolithographically opened through the Cr layer parallel to the y-axis; (3) next, the substrate was packed in a glass flask with powdered benzoic acid; (4) next, the glass flask was immersed in a heating bath and heated to 249 °C in 20 minutes; (5) next, the glass flask was held in the bath at 249 °C for ˜7 hours; (6) next, the substrate was post-baked in flowing oxygen at 500 °C for 5 hours; (7) next, the diffusion masks are removed; and (8) the specimen was cut and polished for end-fire excitation. The length of the waveguide varied between 5-10 mm.

Advantageously, the embodiments of the inventive device can act as a tunable source of radiation if one of the input laser sources is a tunable laser such as a dye laser, or alternatively, a current tuned semiconductor laser.

Further embodiments of the present invention comprise several laser sources, each having a slightly different frequency, being coupled into waveguide 11 by means of bulk optics or, as shown in FIG. 2, by means of integrated optic couplers. FIG. 2 shows a top view of channel waveguide 11 which is embedded in ferroelectric substrate 12. Input beam 60 comprises radiation from a first laser source (not shown) at frequency $w_1$ which is coupled into waveguide 11. Input beam 61 comprises radiation from a second laser source (not shown) at frequency $w_2$ and input beam 62 comprises radiation from a third laser source (not shown) at frequency $w_3$. Beams 61 and 62 are coupled into waveguides 13 and 14, respectively. Radiation coupled into guides 13 and 14 is subsequently coupled into waveguide 11. As a result of the above-described mixing phenomenon, the output radiation from substrate 11 comprises: (1) second harmonic radiation from each of the modes of the individual laser sources which propagate in waveguide 11 and (2) sum-frequency radiation from the modes of the individual laser sources which propagate in waveguide 11. Thus, as a result of second harmonic generation and sum-frequency generation, radiation exits substrate 12 at the following frequencies: $2w_1$, $2w_2$, $2w_3$, $w_1 + w_3$, $w_1 + w_2$, and $w_2 + w_3$. If any of the input beams, for example, beam 62, is cut off, then the corresponding outputs will be missing. Consequently, the output from such a device is made discretely tunable by switching the varius laser sources on or off individually or in groups.

Embodiments of the present invention may also be used as a parametric up-converter. This occurs, for example, if one of the laser inputs is a laser diode whose power is reduced to just over threshold for lasing. In such a case, the corresponding Cerenkov second harmonic radiation would not be present do to the lack of necessary power to drive the nonlinear reaction. Nevertheless, by supplying a sufficiently strong second laser source one can still drive the nonlinear reaction responsible for producing the sum-frequency radiation. In this manner one has "up-converted" the weak laser diode signal to provide a relatively strong sum-frequency radiation signal. Thus, for example, one can achieve blue source generation even with a low power, e.g., 1-5 milliwatt laser diode source, provided a strong cw pump source, for example, in this case, a Nd:YAG laser, is available. Alternatively, the pump or "up-converter" laser could also be one of the common, and now relatively inexpensive, diode lasers which produce approximately 40 milliwatts cw.

Clearly, those skilled in the art recognized that further embodiments of the present invention may be made without departing from its teachings. Therefore, it is intended that all matter contained in the above description or shown in the accompanying drawings shall be interpreted as illustrative and not limiting. For example, although a lithium niobate channel waveguide provides mixing and parametric up-conversion which allows production of a coherent blue source, choice of different lasers to act as sources enables the range of parametrically generated blue light to be selected.

## Claims

1. An optical device comprising:
    a waveguide disposed on a ferroelectric substrate and at least one source of laser radiation.

the laser radiation being coupled into the waveguide to provide output radiation as a result of nonlinear optical interactions.

2. The optical device of claim 1 wherein the waveguide comprises a ferroelectric material.

3. The optical device of claim 2 wherein the substrate comprises lithium niobate.

4. The optical device of claim 2 wherein the substrate comprises lithium tantalate.

5. The optical device of claim 3 wherein the waveguide comprises a proton exhange lithium niobate channel waveguide.

6. The optical device of claim 3 wherein the waveguide comprises a Ti diffused lithium niobate channel waveguide.

7. The optical device of claim 4 wherein the waveguide comprises a proton exchange lithium tantalate channel waveguide.

8. The optical device of claim 4 wherein the waveguide comprises a Ti diffused lithium tantalate channel waveguide.

9. The optical device of claim 1 wherein at least one of the sources is a tunable source of laser radiation.

10. The optional device of claim 1 wherein the power of laser radiation coupled into the waveguide from at least one of the sources may varied.

11. The optical device of claim 10 wherein the range of power variation includes zero power.

FIG 1

FIG 2

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | US - A - 4 427 260 (PUECH et al.) | 1-3,6 | G 02 F 1/35 |
| Y | * Column 1, lines 8-28; Column 2, line 15 - column 4, line 45 * | 5 | G 02 B 6/12 |
| | -- | | |
| X | US - A - 4 236 785 (PAPUCHON et al.) | 1,2,4 | |
| Y | * column 1, line 4 - column 2, line 2; column 3, line 35 - column 4, line 14; column 4, line 63 - column 5, line 48 * | 5,7 | |
| A | | 9,10 | |
| | -- | | |
| X | APPLIED PHYSICS LETTERS, vol. 33, no. 6, September 15, 1978 | 1-3,6,9 | |
| Y | W.SOHLER et al. "Second-harmonic generation in Ti-diffused $LiNbO_3$ optical waveguides with 25 % conversion efficiency" pages 518-520 | 5,7 | |
| | * Totality * | | **TECHNICAL FIELDS SEARCHED (Int Cl 4)** |
| | -- | | G 02 F |
| Y,P | US - A - 4 705 346 (MIYAWAKI) | 5,7 | G 02 B |
| | * Column 2, lines 14-62; claims * | | |
| | & JP-A-60-243 606 (3.12.1985) | | |
| | -- | | |
| Y | APPLIED PHYSICS LETTERS, vol. 41, no. 7, October 1, 1982 | 5 | |
| | J.L.JACKEL et al. "Proton exchange for high-index waveguides in $LiNbO_3$" pages 607,608 | | |
| | * Totality * | | |
| | ---- | | |

The present search report has been drawn up for all claims

| Place of search | Date of completion of the search | Examiner |
|---|---|---|
| VIENNA | 11-07-1988 | GRONAU |